# FASCICULE DE BREVET EUROPEEN

(11) **EP 3 205 544 B1**
(45) Date de publication et mention de la délivrance du brevet: **26.06.2019**
(21) Numéro de dépôt: 17155446.2
(22) Date de dépôt: 09.02.2017
(51) Int. Cl.: B61C 9/38, H02K 9/10

(54) **BOGIE MOTEUR À REFROIDISSEMENT AMÉLIORÉ**
GLÜHKERZE MIT VERBESSERTER ABKÜHLUNG
DRIVING BOGIE WITH IMPROVED COOLING

(30) Priorité: 09.02.2016 FR 1651027
(43) Date de publication de la demande: 16.08.2017
(73) Titulaire: ALSTOM Transport Technologies, 93400 Saint-Ouen (FR)
(72) Inventeur: BOUALEM, Benali, 25660 Saône (FR); RANDRIA, Andry-Mamy, 25000 Besançon (FR); RAGUIN, Bruno, 25290 Ornans (FR)
(74) Mandataire: Lavoix

(56) Documents cités:
- DE-A1-102012 220 659
- US-A1- 2008 030 086

## Description

La présente invention concerne un bogie comportant un châssis, deux essieux, et au moins un premier moteur d'entrainement du premier essieu comportant une carcasse, un rotor et un stator.

L'invention concerne également un véhicule ferroviaire équipé d'au moins un tel bogie.

En fonctionnement, le premier moteur dégage de la chaleur par effet joule dans les bobinages et par frottements. Ceci occasionne une élévation de la température moyenne du moteur à l'intérieur de la carcasse.

Pour limiter l'ampleur de ce phénomène, il est connu d'utiliser un ventilateur externe monté sur l'arbre du moteur afin de réaliser une convection forcée autour de la carcasse. En outre, certains moteurs de bogie incluent un échangeur de chaleur fixé sur la carcasse adapté pour dissiper la chaleur contenue dans l'air interne de la carcasse vers l'atmosphère extérieur.

Le document US-A-2008/030086 décrit un bogie conforme au préambule de la revendication 1.

Les solutions précitées ont une efficacité donnée, qui peut s'avérer insuffisante dans certains cadres. Selon les circonstances, il peut se produire une élévation de la température interne du moteur avec des conséquences négatives, comme des pannes ou une réduction de la durée de vie du bogie.

Un but de l'invention est de fournir un bogie résolvant tout ou partie des inconvénients ci-dessus, c'est-à-dire en particulier un bogie présentant un risque de panne réduit et/ou une durée de vie augmentée.

A cet effet, l'invention a pour objet un bogie selon la revendication 1.

Selon des modes particuliers de réalisation, le bogie comprend l'une ou plusieurs des caractéristiques correspondant aux revendications 2 à 10**.**

L'invention a également pour objet un véhicule ferroviaire comprenant au moins un bogie tel que décrit ci-dessus.

L'invention sera mieux comprise à la lecture de la description qui va suivre, donnée uniquement à titre d'exemple et faite en se référant aux dessins annexés sur lesquels :
- la figure 1 est une vue de dessus schématique d'un bogie selon un premier mode de réalisation de l'invention,
- la figure 2 est une vue schématique en coupe selon un plan vertical du bogie représenté sur la figure 1, et
- la figure 3 est une vue schématique de dessus d'un bogie selon un deuxième mode de réalisation de l'invention. En référence aux figures 1 et 2, on décrit un véhicule ferroviaire 1 comportant au moins un bogie 10 selon un premier mode de réalisation de l'invention.

Le véhicule ferroviaire 1 n'est pas représenté en détail. Il s'agit par exemple d'une rame de train à grande vitesse inter-cité, ou d'un train suburbain ou urbain.

Le véhicule ferroviaire 1 est adapté pour circuler selon une direction longitudinale L, par exemple horizontale. On définit également une direction transversale T sensiblement perpendiculaire à la direction longitudinale L et une direction d'élévation V sensiblement perpendiculaire à la direction longitudinale et la direction transversale. La direction d'élévation V est verticale lorsque le bogie 10 circule sur une voie horizontale (non représentée).

Le bogie 10 comprend un châssis 15, un premier essieu 20A, un deuxième essieu 20B, un premier moteur 30A d'entraînement du premier essieu, et un deuxième moteur 30B d'entraînement du deuxième essieu. Le bogie 10 comprend aussi un échangeur de chaleur 35 fixé à une traverse 37 du châssis 15, et avantageusement un premier échangeur de chaleur auxiliaire 35A et un deuxième échangeur de chaleur auxiliaire 35B montés respectivement sur le premier moteur 30A et le deuxième moteur 51B.

Le châssis 15 représenté est schématique. Le châssis 15 comprend deux longerons 39, 41 transversalement opposés.

La traverse 37 est fixée sur les longerons 39, 41. La traverse 37 est par exemple sensiblement parallèle à la direction transversale T et avantageusement située longitudinalement à égale distance du premier essieu 20Aet du deuxième essieu 20B. La traverse 37 présente par exemple une forme prismatique à génératrice transversale, avantageusement à section rectangulaire perpendiculairement à la direction transversale T. La traverse 37 comporte avantageusement une face inférieure 43 contre laquelle l'échangeur de chaleur 35 est fixé.

La traverse 37 supporte au moins 80% du poids de l'échangeur 35, avantageusement sensiblement tout le poids de l'échangeur.

Dans l'exemple représenté, le deuxième essieu 20B est symétrique du premier essieu 20A par rapport à un plan médian P perpendiculaire à la direction longitudinale L. Aussi, seul le premier essieu 20A sera décrit ci-après. Les éléments analogues du deuxième essieu 20B portent les mêmes références numériques suivies de la lettre « B ».

Le premier essieu 20A comprend un arbre 45A monté respectivement sur les extrémités longitudinales des longerons 39, 41, et deux roues 47A fixées sur l'arbre 45A.

Le premier essieu 20A, les longerons 39, 41, la traverse 37 et l'échangeur de chaleur 35 définissent un premier espace 49A en vue de dessus, dans lequel est logé le premier moteur 30A.

Les roues 47A sont situées transversalement entre le premier moteur 30A et, respectivement, les longerons 39, 41.

Le premier moteur 30A comprend une carcasse 51A, un stator 53A, un rotor 55A, un arbre 57A solidaire du rotor, un ventilateur interne 59A et optionnellement un ventilateur externe 61A. Le premier moteur 30A comprend aussi un réducteur 63A connecté mécaniquement à l'arbre 57A et à l'arbre 45A du premier essieu 20A.

Le réducteur 63A est situé transversalement entre la carcasse 51A et l'une des roues 47A, tandis que le réducteur 63B du deuxième moteur 30B est transversalement situé entre la carcasse 51B et la roue 40B transversalement opposée à la roue 47A précitée.

Ainsi, le premier moteur 30A et le deuxième moteur 30B sont situés longitudinalement de part et d'autre de la traverse 37 et avantageusement orientés tête-bêche.

L'arbre 57A est par exemple sensiblement parallèle à la direction transversale T. A une extrémité transversalement opposée au réducteur 63A, l'arbre 57A porte le ventilateur externe 61A.

Le ventilateur externe 61A est adapté pour créer un flux d'air F1A lorsque l'arbre 57A tourne.

Le flux d'air F1A est orienté principalement selon la direction transversale T et est situé contre la carcasse 51A.

La carcasse 51A comporte deux entrées d'air 65A, 66A et deux sorties d'air 67A, 68A.

Les sorties d'air 67A, 68A sont situées transversalement au niveau du ventilateur interne 59A, qui est dans l'exemple représenté de type centrifuge.

La carcasse 51A, le stator 53A et le rotor 55A sont configurés pour définir :
- un premier passage F2A transversal pour l'air, le premier passage étant situé radialement entre le rotor et le stator, et
- un deuxième passage F3A transversal pour l'air, le deuxième passage étant situé radialement entre le stator et la carcasse.

Le ventilateur interne 59A est adapté pour créer un flux d'air dans le premier passage F2A et un flux d'air dans le deuxième passage F3A, puis à diriger cet air vers les sorties d'air 67A, 68A.

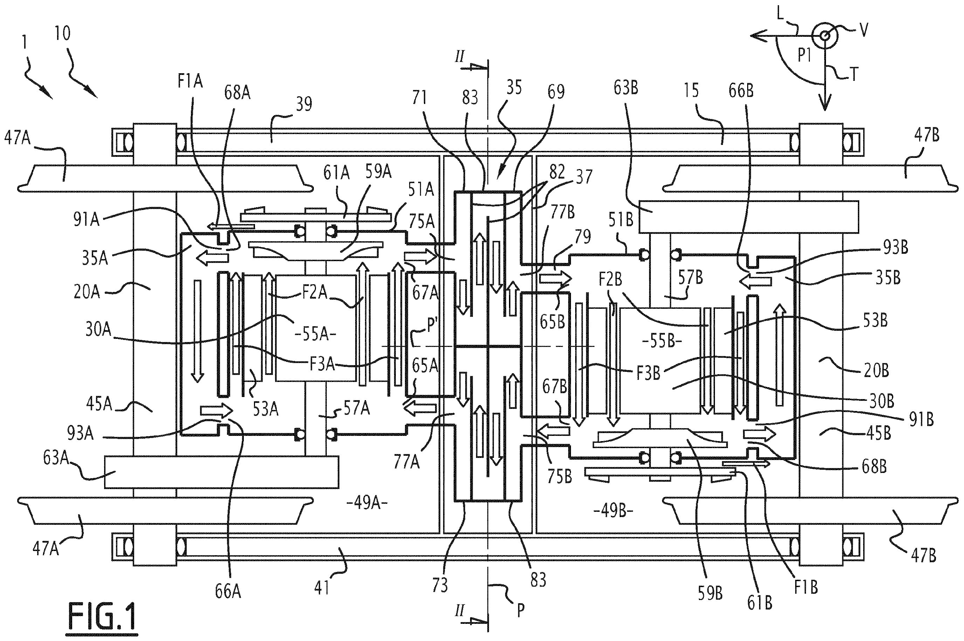

Le deuxième moteur 30B se déduit sur la figure 1 du premier moteur 30A par une rotation de 180°, aussi, il ne sera pas décrit en détail ci-après. Les éléments analogues du deuxième moteur 30B portent les mêmes références numériques suivies de la lettre « B ».

L'échangeur de chaleur 35 est une pièce rapportée fixée à la traverse 37, avantageusement en dessous de celle-ci, selon la direction d'élévation V. L'échangeur de chaleur 35 est par exemple en aluminium ou en alliage.

L'échangeur de chaleur 35 comprend un corps 69 constitué de deux demi-corps 71, 73 avantageusement contigus transversalement.

L'échangeur de chaleur 35 comporte aussi avantageusement une surface inférieure 80 munie d'ailettes 81 adaptées pour dissiper la chaleur en provenance des flux d'air traversant l'échangeur de chaleur.

Le corps 69 comprend une première entrée d'air 75A connectée fluidiquement à la sortie d'air 67A du premier moteur 30A, une deuxième entrée d'air 75B connectée fluidiquement à la sortie d'air 67B du deuxième moteur 30B, une première sortie d'air 77A connectée fluidiquement à l'entrée d'air 65A, et une deuxième sortie d'air 77B connectée fluidiquement à l'entrée d'air 65B.

Comme visible sur la figure 1, le corps 69 de l'échangeur de chaleur 35 est situé à l'intérieur de la traverse 37 en projection orthogonale sur un plan P1 défini par la direction longitudinale L et par la direction transversale T.

Lesdites connexions fluidiques sont par exemple formées par des canalisations, par exemple orientées sensiblement longitudinalement.

Les deux demi-corps 71, 73 sont symétriques l'un de l'autre, à l'exception des entrées et sorties d'air, par rapport à un plan médian P' perpendiculaire à la direction transversale T. Chaque demi-corps 71, 73 comporte des parois internes 82 et des parois externes 83 adaptées pour recevoir de la chaleur et la dissiper dans l'atmosphère extérieure.

Les parois internes 82 sont par exemple des plaques perpendiculaires à la direction longitudinale L qui définissent un passage en zigzag depuis la première entrée d'air 75A jusqu'à la deuxième sortie d'air 77B d'une part, et de la deuxième entrée d'air 75B jusqu'à la première sortie d'air 77A d'autre part.

Selon une variante non représentée, les deux demi-corps 71, 73 ne sont pas contigus et forment deux échangeurs séparés, par exemple par un espace selon la direction transversale T.

Selon une autre variante (non représentée), les deux demi-corps 71, 73 ne sont pas contigus, mais sont imbriqués l'un dans l'autre, tout en définissant respectivement deux passages d'air séparés l'un de l'autre dans le circuit d'air 79.

Le premier échangeur de chaleur auxiliaire 35A et le deuxième échangeur de chaleur auxiliaire 35B sont montés respectivement sur les carcasses 51A, 51B.

Le premier échangeur de chaleur auxiliaire 35A est par exemple situé longitudinalement entre l'arbre 45A du premier essieu 20A et la carcasse 51A du premier moteur 30A. Le premier échangeur de chaleur auxiliaire 35A comporte une entrée d'air 91A connectée fluidiquement à la sortie d'air 68A de la carcasse 51A, et une sortie d'air 93A connectée fluidiquement à l'entrée d'air 66A.

Le premier échangeur de chaleur auxiliaire 35A est adapté pour refroidir de l'air chaud en provenance du premier moteur 30A et à restituer de l'air refroidi via la sortie d'air 93A.

Le deuxième échangeur de chaleur auxiliaire 35B se déduit sur la figure 1 du premier échangeur de chaleur auxiliaire 35A par une rotation de 180°, aussi, il ne sera pas décrit en détail ci-après. Les éléments analogues du deuxième échangeur de chaleur auxiliaire 35B portent les mêmes références numériques suivies de la lettre « B ».

L'échangeur de chaleur 35 et les carcasses 51A, 51B définissent un circuit d'air 79 de refroidissement du premier moteur 30A et du deuxième moteur 30B.

Le premier échangeur de chaleur auxiliaire 35A et la carcasse 51A définissent une boucle du circuit d'air 79.

De même, le deuxième échangeur de chaleur auxiliaire 35B et la carcasse 51B définissent une autre boucle du circuit d'air 79.

Le fonctionnement du bogie 10 se déduit de sa structure et va être décrit brièvement ci-après.

Lorsque les arbres 57A, 57B du premier moteur 30A et du deuxième moteur 30B tournent, les ventilateurs externes 61A, 61B produisent les flux d'air externes F1A, F1B qui refroidissent les carcasses 51A, 51B, et optionnellement le premier échangeur auxiliaire 35A et le deuxième échangeur auxiliaire 35B.

En outre, les ventilateurs internes 59A, 59B mettent en mouvement l'air contenu dans le circuit d'air 79.

Le ventilateur interne 59A créé un appel d'air créant des flux d'air respectivement dans le premier passage F2A et le deuxième passage F3A. Les flux d'air ainsi créés sont expulsés par la sortie d'air 67A vers l'échangeur de chaleur 35 via la première entrée d'air 75A d'une part, et par la sortie d'air 68A vers le premier échangeur de chaleur auxiliaire 35A via l'entrée d'air 91A d'autre part.

L'air chaud en provenance du premier moteur 30A parcourt le demi-corps 71 jusqu'à la deuxième sortie d'air 77B en cédant sa chaleur aux parois 82, 83 de ce demi-corps. La chaleur captée par les parois du demi-corps 71 est évacuée vers l'atmosphère extérieure, en particulier par les ailettes 81 situées en dessous de l'échangeur de chaleur 35.

L'air entrant dans le premier échangeur de chaleur auxiliaire 35A par l'entrée d'air 91A parcourt le premier échangeur de chaleur auxiliaire 35A et se refroidit, puis sort par la sortie d'air 93A et entre dans le premier moteur 30A par l'entrée d'air 66A.

L'air refroidi sortant de l'échangeur 35 par la deuxième sortie d'air 77B entre ensuite dans le deuxième moteur 30B par l'entrée d'air 65B. Le ventilateur 59B fait passer l'air refroidi entre le stator 53B et le rotor 55B dans le premier passage F2B et dans le deuxième passage F3B. Ces flux sont expulsés par la sortie d'air 67B vers l'échangeur de chaleur 35 via la deuxième entrée d'air 75B d'une part, et par la sortie d'air 68B vers le deuxième échangeur auxiliaire 35B via l'entrée d'air 91B d'autre part.

L'air chaud entré par la deuxième entrée d'air 75B parcourt le demi-corps 73 jusqu'à la première sortie d'air 77A en cédant de la chaleur aux parois 82, 83 de ce demi-corps.

Ensuite, l'air refroidi sort par la sortie d'air 77A et entre dans le premier moteur 30A par l'entrée d'air 65A.

L'air entrant dans le deuxième échangeur de chaleur auxiliaire 35B via l'entrée d'air 91B parcourt le deuxième échangeur de chaleur auxiliaire 35B et se refroidit, puis sort par la sortie d'air 93B et entre dans le deuxième moteur 30B par l'entrée d'air 66B.

Les étapes décrites ci-dessus se reproduisent cycliquement.

Grâce aux caractéristiques décrites ci-dessus, les moteurs 30A, 30B bénéficient d'une grande surface d'échange thermique. La température à l'intérieur des carcasses 51A et 51B est plus proche de la température de l'atmosphère ambiante que dans les moteurs de l'art antérieur. Le risque de panne est réduit, et la durée de vie du bogie 10 est améliorée. En outre, la compacité est améliorée.

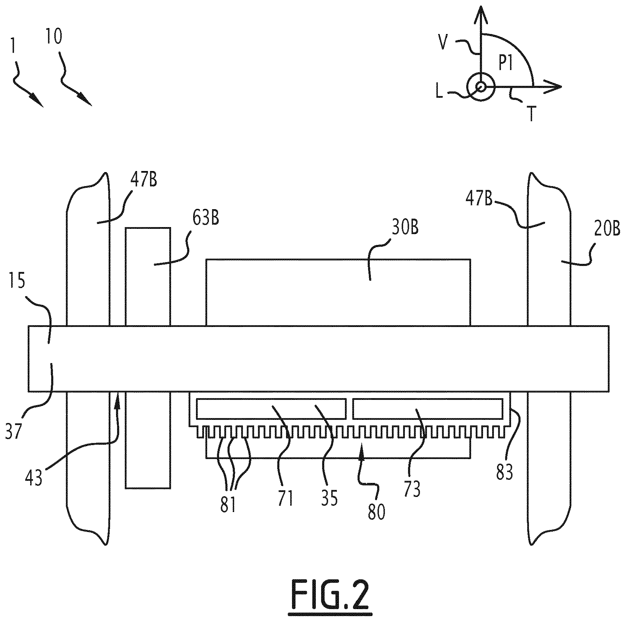

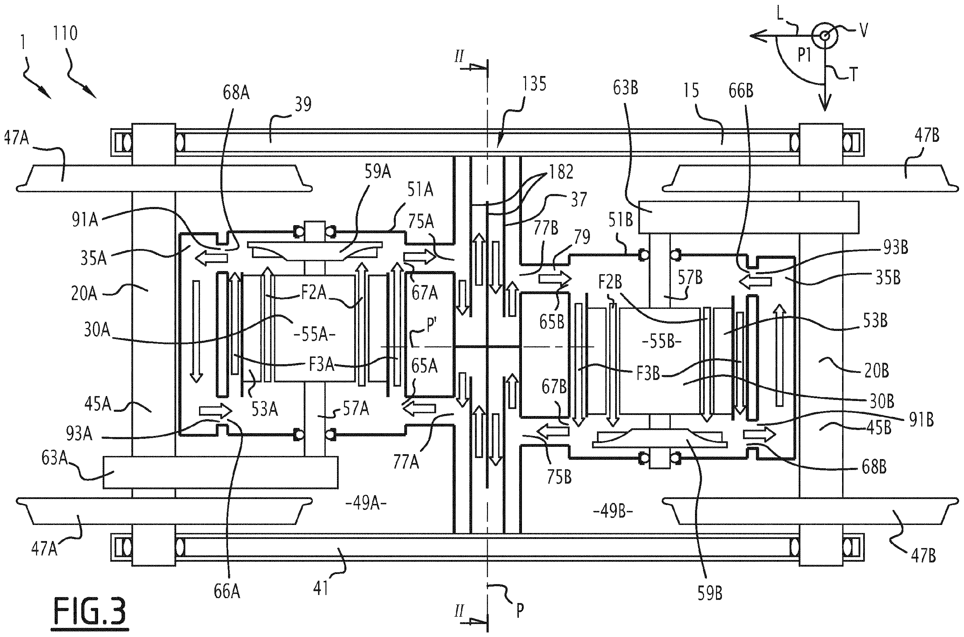

En référence à la figure 3, on va maintenant décrire un bogie 110 selon un deuxième mode de réalisation de l'invention. Le bogie 110 est analogue au bogie 10 représenté sur les figures 1 et 2. Les éléments similaires du bogie 10 portent les mêmes références numériques que ceux du bogie 10. Seules les différences seront décrites en détail ci-après.

Le bogie 110 diffère du bogie 10 par la structure de l'échangeur 35. En effet, l'échangeur 35 n'est pas fixé sur la traverse 37, mais la traverse comporte des structures internes 182 pour former l'échangeur de chaleur 35.

Le fonctionnement du bogie 110 est analogue à celui du bogie 10.

Selon une variante, représentée sur le bogie 110, le premier moteur 30A est dépourvu du ventilateur externe 61A et le deuxième moteur 30B est dépourvu du ventilateur externe 61B.

Selon une autre variante (non représentée) des bogies 10 et 110, le circuit de refroidissement 79 comporte deux sous-circuits fluidiquement indépendants. Ainsi, l'air chaud en provenance du premier moteur 30A entre dans l'échangeur de chaleur 35, 135 par la première entrée 75A et en ressort directement par la première sortie d'air 77A sans passer par le deuxième moteur 30B. De même, l'air chaud en provenance du deuxième moteur 30B entre dans l'échangeur de chaleur 35, 135 par la deuxième entrée d'air 75B et en ressort directement par la deuxième sortie d'air 77B sans passer par le premier moteur 30A. Dit autrement, l'échangeur de chaleur 35, 135 comprend deux parties fluidiquement indépendantes respectivement dédiées au refroidissement du premier moteur 30A et du deuxième moteur 30B.

## Revendications

1. Bogie (10; 110) adapté pour circuler selon une direction longitudinale (L), comportant :
- un châssis (15) comportant au moins une traverse (37) s'étendant selon une direction transversale (T) sensiblement perpendiculaire à la direction longitudinale (L),
- un premier essieu (20A) et un deuxième essieu (20B), et
- au moins un premier moteur (30A) d'entraînement du premier essieu (20A), le premier moteur (30A) comportant une carcasse (51A), un rotor (55A), un stator (53A), un arbre (57A) entraîné par le rotor (55A), et au moins un ventilateur interne (59A) entraîné par l'arbre (57A),
**caractérisé en ce que** le bogie (10 ; 110) comprend en outre un échangeur de chaleur (35) formant une pièce rapportée fixée à la traverse (37), la traverse (37) supportant au moins 80% du poids de l'échangeur de chaleur (35), ou un échangeur de chaleur (135) formé par des structures internes (182) de la traverse (37),
l'échangeur de chaleur (35 ; 135) comportant au moins une première entrée d'air (75A) connectée à une sortie d'air (67A) de la carcasse (51A), et au moins une première sortie d'air (77A) connectée à une entrée d'air (65A) de la carcasse (51A),
l'échangeur de chaleur (35 ; 135) et la carcasse (51A) définissant au moins en partie un circuit d'air (79) de refroidissement du premier moteur (30A), l'échangeur de chaleur (35; 135) étant destiné à recevoir de la chaleur véhiculée par de l'air en provenance du premier moteur (30A) et à dissiper cette chaleur dans l'atmosphère, et
le circuit d'air (79) comportant :
- un premier passage (F2A) transversal situé radialement entre le rotor (55A) et le stator (53A), et
- un deuxième passage (F3A) transversal situé radialement entre le stator (53A) et la carcasse (51A).

2. Bogie (10; 110) selon la revendication 1, comprenant en outre un premier échangeur de chaleur auxiliaire, distinct de l'échangeur de chaleur (35 ; 135), monté sur la carcasse (51A), le premier échangeur de chaleur auxiliaire (35A) comportant au moins une entrée d'air (91A) connectée à une sortie d'air (68A) de la carcasse (51A), et au moins une sortie d'air (93A) connectée à une entrée d'air (66A) de la carcasse (51A).

3. Bogie (10 ; 110) selon la revendication 2, dans lequel le premier moteur (30A) est logé longitudinalement entre un arbre (45A) du premier essieu (20A) et l'échangeur de chaleur (35 ; 135), et le premier échangeur de chaleur auxiliaire (35A) est situé longitudinalement entre l'arbre (45A) et la carcasse (51A) du premier moteur (30A).

4. Bogie (110) selon l'une quelconque des revendications 1 à 3, dans lequel le premier moteur (30A) est dépourvu d'un ventilateur qui serait actionné par l'arbre (57A) à l'extérieur de la carcasse (51A).

5. Bogie (10) selon l'une quelconque des revendications 1 à 4, dans lequel l'échangeur de chaleur (35) est situé en dessous de la traverse (37) lorsque le bogie (10) se situe sur une voie de circulation.

6. Bogie (10) selon l'une quelconque des revendications 1 à 5, dans lequel une paroi inférieure (80) de l'échangeur de chaleur (35) comporte des ailettes (81).

7. Bogie (10) selon l'une quelconque des revendications 1 à 6, dans lequel l'échangeur de chaleur (35) comporte un corps (69) situé à l'intérieur de la traverse (37) en projection orthogonale sur un plan (P1) défini par la direction longitudinale (L) et par la direction transversale (T).

8. Bogie (10 ; 110) selon l'une quelconque des revendications 1 à 7, dans lequel la traverse (37) a une forme prismatique selon la direction transversale (T), de préférence à section rectangulaire.

9. Bogie (10 ; 110) selon l'une quelconque des revendications 1 à 8, comportant en outre un deuxième moteur (30B) d'entraînement du deuxième essieu (20B),
le deuxième moteur (30B) comportant une carcasse (51B), un rotor (55B), un stator (53B), un arbre (57B) entraîné par le rotor (55B), et au moins un ventilateur interne (59B) situé à l'intérieur de la carcasse (51B) et entraîné par l'arbre (57B),
l'échangeur de chaleur (35 ; 135) comportant au moins une deuxième entrée d'air (75B) connectée à une sortie d'air (67B) de la carcasse (51B) du deuxième moteur (30B), et au moins une deuxième sortie d'air (77B) connectée à une entrée d'air (65B) de la carcasse (51B) du deuxième moteur (30B), et
le circuit d'air (79) étant également défini par la carcasse (51B) du deuxième moteur (30B) et étant adapté pour refroidir le deuxième moteur (30B).

10. Bogie (10 ; 110) selon la revendication 9, comportant en outre un deuxième échangeur de chaleur auxiliaire (35B), distinct de l'échangeur de chaleur (35 ; 135), monté sur la carcasse (51B) du deuxième moteur (30B), le deuxième échangeur de chaleur auxiliaire (35B) comportant au moins une entrée d'air (91B) connectée à une sortie d'air (68B) de la carcasse (51B), et au moins une sortie d'air (93B) connectée à une entrée d'air (66B) de la carcasse (51B).

11. Véhicule ferroviaire (1) comprenant au moins un bogie (10 ; 110) selon l'une quelconque des revendications 1 à 10.

## Patentansprüche

1. Drehgestell (10; 110), welches dazu eingerichtet ist, entlang einer Längsrichtung (L) zu fahren, aufweisend:
- ein Chassis (15), welches mindestens einen Querträger (37), welcher sich entlang einer Querrichtung (T), die im Wesentlichen senkrecht zur Längsrichtung (L) ist, erstreckt,
- einen ersten Radsatz (20A) und einen zweiten Radsatz (20B), und
- mindestens einen ersten Motor (30A) zum Antreiben des ersten Radsatzes (20A), wobei der erste Motor (30A) ein Gehäuse (51A), einen Rotor (55A), einen Stator (53A), eine Welle (57A), welche durch den Rotor (55A) angetrieben wird, und mindestens einen internen Lüfter (59A), welcher durch die Welle (57A) angetrieben wird, aufweist,
**gekennzeichnet dadurch, dass** das Drehgestell (10; 110) ferner einen Wärmetauscher (35), welcher ein Einsetzteil, das an dem Querträger (37) befestigt ist, bildet, wobei der Querträger (37) mindestens 80% des Gewichts des Wärmetauschers (35) abstützt, oder einen Wärmetauscher (135), welcher durch interne Strukturen (182) des Querträgers (37) gebildet ist, aufweist,
wobei der Wärmetauscher (35; 135) mindestens einen ersten Lufteinlass (75A), welcher mit einem Luftauslass (67A) des Gehäuses (51A) verbunden ist, und mindestens einen ersten Luftauslass (77A), welcher mit einem Lufteinlass (65A) des Gehäuses (51A) verbunden ist, aufweist,
wobei der Wärmetauscher (35; 135) und das Gehäuse (51A) zumindest teilweise einen Luftkreislauf (79) zur Kühlung des ersten Motors (30A) definieren, wobei der Wärmetauscher (35; 135) dazu bestimmt ist, die Wärme, welche durch die Luft von dem ersten Motor (30A) übertragen wird, zu erhalten und diese Wärme in die Umgebung abzuführen, und
wobei der Luftkreislauf (79) aufweist:
- einen ersten transversalen Durchgang (F2A), welcher radial zwischen dem Rotor (55A) und dem Stator (53A) angeordnet ist, und
- einen zweiten transversalen Durchgang (F3A), welcher radial zwischen dem Stator (53A) und dem Gehäuse (51A) angeordnet ist.

2. Drehgestell (10; 110) gemäß dem Anspruch 1, ferner aufweisend einen ersten, von dem Wärmetauscher (35; 135) verschiedenen Hilfswärmetauscher, welcher an dem Gehäuse (51A) angebracht ist, wobei der erste Hilfswärmetauscher (35A) mindestens einen Lufteinlass (91A), welcher mit einem Luftauslass (68A) des Gehäuses (51A) verbunden ist, und mindestens einen Luftauslass (93A), welcher mit einem Lufteinlass (66A) des Gehäuses (51A) verbunden ist, aufweist.

3. Drehgestell (10; 110) gemäß dem Anspruch 2, wobei der erste Motor (30A) längs zwischen einer Welle (45A) des ersten Radsatzes (20A) und dem Wärmetauscher (35; 135) untergebracht ist, und der erste Hilfswärmetauscher (35A) längs zwischen der Welle (45A) und dem Gehäuse (51A) des ersten Motors (30A) angeordnet ist.

4. Drehgestell (110) gemäß irgendeinem der Ansprüche 1 bis 3, wobei der erste Motor (30A) frei ist von einem Lüfter, welcher durch die Welle (57A) betrieben wird, an der Außenseite des Gehäuses (51A).

5. Drehgestell (10) gemäß irgendeinem der Ansprüche 1 bis 4, wobei der Wärmetauscher (35) unterhalb des Querträgers (37) angeordnet ist, wenn sich das Fahrgestell (10) auf einem Fahrgleis befindet.

6. Drehgestell (10) gemäß irgendeinem der Ansprüche 1 bis 5, wobei eine untere Wand (80) des Wärmetauschers (35) Rippen (81) aufweist.

7. Drehgestell (10) gemäß irgendeinem der Ansprüche 1 bis 6, wobei der Wärmetauscher (35) einen Körper (69), welcher bei einer orthogonalen Projektion auf eine Ebene, welche durch die Längsrichtung (L) und durch die Querrichtung (T) definiert ist, innerhalb des Querträgers (37) angeordnet ist, aufweist.

8. Drehgestell (10; 110) gemäß irgendeinem der Ansprüche 1 bis 7, wobei der Querträger (37) eine prismatische Form entlang der Querrichtung (T), bevorzugt mit rechteckigem Querschnitt, hat.

9. Drehgestell (10; 110) gemäß irgendeinem der Ansprüche 1 bis 8, ferner aufweisend einen zweiten Motor (30B) zum Antreiben des zweiten Radsatzes (20B),
wobei der zweite Motor (30B) ein Gehäuse (51B), einen Rotor (55B), einen Stator (53B), eine Welle (57B), welche durch den Rotor (55B) angetrieben wird, und mindestens einen internen Lüfter (59B), welcher innerhalb des Gehäuses (51B) angeordnet ist und durch die Welle (57A) angetrieben wird, aufweist,
wobei der Wärmetauscher (35; 135) mindestens einen zweiten Lufteinlass (75B), welcher mit einem Luftauslass (67B) des Gehäuses (51B) des zweiten Motors (30B) verbunden ist, und mindestens einen zweiten Luftauslass (77B), welcher mit einem Lufteinlass (65B) des Gehäuses (51B) des zweiten Motors (30B) verbunden ist, aufweist,
wobei der Luftkreislauf (79) auch durch das Gehäuse (51B) des zweiten Motors (30B) definiert ist und dazu eingerichtet ist, den zweiten Motor (30B) zu kühlen.

10. Drehgestell (10; 110) gemäß dem Anspruch 9, ferner aufweisend einen zweiten von dem Wärmetauscher (35; 135) verschiedenen Hilfswärmetauscher (35B), welcher an dem Gehäuse (51B) des zweiten Motors (30B) angebracht ist, wobei der zweite Hilfswärmetauscher (35B) mindestens einen Lufteinlass (91B), welcher mit einem Luftauslass (68B) des Gehäuses (51B) verbunden ist, und mindestens einen Luftauslass (93B), welcher mit einem Lufteinlass (66B) des Gehäuses (51B) verbunden ist, aufweist.

11. Schienenfahrzeug (1), aufweisend mindestens ein Drehgestell (10; 110) gemäß irgendeinem der Ansprüche 1 bis 10.

## Claims

1. Bogie (10; 110) adapted to travel in a longitudinal direction (L), comprising:
- a chassis (15) having at least one cross-member (37) extending in a transverse direction (T) substantially perpendicular to the longitudinal direction (L),
- a first axle (20A) and a second axle (20B), and
- at least a first motor (30A) for driving the first axle (20A), the first motor (30A) having a housing (51A), a rotor (55A), a stator (53A), a shaft (57A) driven by the rotor (55A), and at least one internal fan (59A) driven by the shaft (57A),
**characterised in that** the bogie (10; 110) further comprises a heat exchanger (35) forming a separate part fixed to the cross-member (37), the cross-member (37) bearing at least 80% of the weight of the heat exchanger (35), or a heat exchanger (135) formed by internal structures (182) of the cross-member (37),
the heat exchanger (35; 135) having at least a first air inlet (75A) connected to an air outlet (67A) of the housing (51A), and at least a first air outlet (77A) connected to an air inlet (65A) of the housing (51A),
the heat exchanger (35; 135) and the housing (51A) defining at least in part an air circuit (79) for cooling the first motor (30A), the heat exchanger (35; 135) being intended to receive heat carried by air coming from the first motor (30A) and to dissipate that heat into the atmosphere, and
the air circuit (79) having:
- a first transverse passage (F2A) situated radially between the rotor (55A) and the stator (53A), and
- a second transverse passage (F3A) situated radially between the stator (53A) and the housing (51A).

2. Bogie (10; 110) according to claim 1, further comprising a first auxiliary heat exchanger, separate from the heat exchanger (35; 135), mounted on the housing (51A), the first auxiliary heat exchanger (35A) having at least one air inlet (91A) connected to an air outlet (68A) of the housing (51A), and at least one air outlet (93A) connected to an air inlet (66A) of the housing (51A).

3. Bogie (10; 110) according to claim 2, wherein the first motor (30A) is housed longitudinally between a shaft (45A) of the first axle (20A) and the heat exchanger (35; 135), and the first auxiliary heat exchanger (35A) is situated longitudinally between the shaft (45A) and the housing (51A) of the first motor (30A).

4. Bogie (110) according to any one of claims 1 to 3, wherein the first motor (30A) does not have a fan which would be actuated by the shaft (57A) outside the housing (51A).

5. Bogie (10) according to any one of claims 1 to 4, wherein the heat exchanger (35) is situated beneath the cross-member (37) when the bogie (10) is situated on a track.

6. Bogie (10) according to any one of claims 1 to 5, wherein a bottom wall (80) of the heat exchanger (35) has fins (81).

7. Bogie (10) according to any one of claims 1 to 6, wherein the heat exchanger (35) comprises a body (69) situated inside the cross-member (37) in orthogonal projection on a plane (P1) defined by the longitudinal direction (L) and by the transverse direction (T).

8. Bogie (10; 110) according to any one of claims 1 to 7, wherein the cross-member (37) has a prismatic shape in the transverse direction (T), of preferably rectangular cross-section.

9. Bogie (10; 110) according to any one of claims 1 to 8, further having a second motor (30B) for driving the second axle (20B),
the second motor (30B) having a housing (51B), a rotor (55B), a stator (53B), a shaft (57B) driven by the rotor (55B), and at least one internal fan (59B) situated inside the housing (51B) and driven by the shaft (57B),
the heat exchanger (35; 135) having at least a second air inlet (75B) connected to an air outlet (67B) of the housing (51B) of the second motor (30B), and at least a second air outlet (77B) connected to an air inlet (65B) of the housing (51B) of the second motor (30B), and
the air circuit (79) likewise being defined by the housing (51B) of the second motor (30B) and being adapted to cool the second motor (30B).

10. Bogie (10; 110) according to claim 9, further having a second auxiliary heat exchanger (35B), separate from the heat exchanger (35; 135), mounted on the housing (51B) of the second motor (30B), the second auxiliary heat exchanger (35B) having at least one air inlet (91B) connected to an air outlet (68B) of the housing (51B), and at least one air outlet (93B) connected to an air inlet (66B) of the housing (51B).

11. Railway vehicle (1) comprising at least one bogie (10; 110) according to any one of claims 1 to 10.
